# EUROPEAN PATENT SPECIFICATION

(11) **EP 3 632 726 B1**
(45) Date of publication and mention of the grant of the patent: **26.04.2023**
(21) Application number: 19382867.0
(22) Date of filing: 07.10.2019
(51) Int. Cl.: B60H 1/34, F24F 13/062

(54) **AIR DIFFUSER FOR A VEHICLE**
LUFTVERTEILER FÜR EIN FAHRZEUG
DIFFUSEUR D'AIR POUR UN VÉHICULE

(30) Priority: 05.10.2018 ES 201830963
(43) Date of publication of application: 08.04.2020
(73) Proprietor: Seat, S.A., 08760 Martorell (ES)
(72) Inventor: PEÑA MARTÍNEZ, José, 08760 Martorell (ES); DEL CAMPO MELGAREJO, Luis, 08760 Martorell (ES); PÉREZ DÍAZ, Manuel, 08760 Martorell (ES); PÉREZ SERRANO, Rubén, 08760 Martorell (ES)
(74) Representative: Elzaburu S.L.P.

(56) References cited:
- DE-A1-102005 027 746
- JP-A- 2007 196 942
- JP-A- 2015 227 118

## Description

### Object of the invention

This invention concerns an air diffuser for a vehicle according to Claim 1, incorporating significant innovations and advantages.

### Background of the invention

Air diffusers are known in the state of the art, installed in instrument panels, with the aim of directing the air towards the interior of vehicle cabins. Usually, these elements have a plurality of blades, a first group of blades in the area furthest away from the passenger compartment to direct the air in a first direction and a second group of blades in the area closest to the passenger compartment to direct the air in a second direction, with this second group of blades being visible. The fact that there is a plurality of blades in the dashboard area means that a lot of space is occupied, with the aesthetic disadvantages that this also implies. For this reason, it is currently intended for the blades of the diffusers to be hidden from the users of the vehicle and for the air outlet slot to take up less space.

In relation to the aforementioned trend, it is known that the document EP1331116 has been published, detailing a diffuser for the interior of vehicles which comprises interior walls of the cavity of the air casing with an arched shape in such a way that air adheres to the walls by the Coand 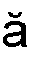 effect. The diffuser has a guiding means inside the cavity to guide the air coming out of the nozzle, and an adjusting element to adjust the guiding means. This guiding means is pivotable with respect to the opening, following the direction of the air outlet, before the arched zone.

The disadvantage of EP1331116 is that the air outlet opening is not optimally directed. This is because, in order to achieve a good Coand 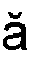 effect, the air must be adhered to the arched surfaces inside the cavity in the outlet zone, in such a way that the air is clogged up in that zone. In document EP1331116, however, the air is clogged up in the air inlet zone of the diffuser cavity by means of guidance, and then expanded in the zone closest to the air outlet. The widening of the channel in this zone causes the air flow to not be channelled. On the other hand, this solution implies having two elements, a guiding means and another clogging element, which implies greater complication in the assembly.

It is known documents JP2007196942A disclosing a register provided with a bezel having a retainer for forming an air passage and an outlet opening. An inner plate is arranged vertically movably and turnably in the retainer. The register is provided with a drive part for vertically moving or turning/driving the inner plate on one side wall part of the retainer. In the drive part, a first link plate, a dial knob and a second link plate are arranged in parallel in this order. By turning the dial knob in a vertical direction, a front pin part or a rear pin part of the inner plate is slid in a front vertical groove or a rear vertical groove to vertically move or turn the inner plate.

It is also known document JP2015227118 disclosing how to improve designability of a structure serving as an incorporation destination, by controlling a wind direction by a simple structure without providing an air outlet with a fin for controlling the wind direction. An air outlet part is provided with an air outlet having a double cylinder structure that comprises inner and outer cylindrical bodies. Air flowing inward from one end of the outer cylindrical body is divided into an air flow directed toward the air outlet from its inflow side and an air flow directed toward the air outlet from the side opposite to its inflow side. A flow rate between both the air flows can be adjusted by a slide motion of the inner cylindrical body.

It is also known document DE102005027746 disclosing an air outlet having a rectangular frame with several transversally positioned bridges. Each of the bridges has a triangular cross section with a plane segment at the front and the crest pointing to the inner space of the unit. Movable elements are positioned in the gaps between the bridges. The elements have plane fronts and curved rear areas. The shape of the gaps created when the elements are moved to the inner space can be varied because of the specific contours of both the bridges and the moving elements.

### Description of the invention

In accordance with the present invention there is provided an air diffuser for a vehicle, as set out in independent claim 1. Preferred embodiments of the present invention are laid down in the appended dependent claims. In particular, the invention deals with a diffuser for a vehicle interior with a guiding means in the form of a central blade, arranged inside a cavity of the air diffuser. The guiding means can be moved from the upper zone to the lower zone of the cavity and vice versa, having a plurality of intermediate positions in which two air channels are created. When the guiding means is in the upper or lower zone of the cavity, the guiding means closes one of the two channels. In the air outlet area, the guiding means is parallel to the inner surfaces of the cavity, in such a way that the narrowing of the air in the casing outlet is optimal. The movement of the guiding means is a displacement. In this way the parallelism is kept constant in all the positions of the guiding means, achieving an optimal direction and not penalising any position. At the same time, it simplifies both the complexity of the system, minimising the number of components that make up the set, and the movement of the guiding means itself, improving its reliability.

When the guiding means or central blade defines a parallel shape, at least in the outlet zone, the direction being right in the air outlet zone, the direction achieved is optimal, since the channel does not expand, losing the direction of the channel, or encounter obstacles before the exit. The closing of any of the two channels is originated by means of the guiding means itself, blocking the exit of air through one of them.

More particularly, the present invention consists of an air diffuser for a vehicle where the air diffuser comprises a casing, where the casing defines an air inlet opening, an air outlet opening, and a cavity, where the cavity is arranged between the inlet opening and the outlet opening, where the casing comprises a first wall and a second wall, where the first wall is facing the second wall, where the first wall and the second wall define a narrowing of the cavity to the outlet opening, where the air diffuser comprises a guiding means arranged in the cavity, where the guiding means comprises a first end close to the outlet opening. In the diffuser of the present invention, the guiding means is displaceable between a first position, where the first end is arranged adjacent to the second wall, and a second position, where the first end is arranged adjacent to the first wall. In this way, in the first and second position, the guiding means constricts the air against one of the walls of the inner cavity, partially or completely blocking the outlet through one of the channels. In addition, as the end of the guiding means is in the area closest to the air outlet, the air flow is directed to the air outlet, avoiding interference and increasing the efficiency of the system. Adjacent means that it is contiguous or located in the vicinity, being possible that the first end comes into contact with the second wall, in the first position of the guiding means, or with the first wall, in the second position of the guiding means.

Preferably, the guiding means can be moved in a number of intermediate positions between the first position and the second position, in such a way that in each intermediate position the guiding means divides the cavity into two channels. The desired effect is to generate better air routing in the area next to the air opening in all positions. The guiding means is configured to control the ratio between the upper and lower flow, in such a way that the flows are equal in a horizontal position. Thus, if the airflow section of a first channel is greater than the airflow section of a second channel, the air extracted through the air outlet opening will be diverted in the direction of the first channel. The higher the ratio between the first channel and the second channel, the greater the direction driven to the output flow.

According to the invention, the casing comprises at least one guide, where the at least one guide defines a displacement of the guiding means between the first position and the second position. In this way, the guiding means is displaced between a plurality of positions with high precision.

According to the invention, the displacement of the guiding means comprises a third position where the third position is intermediate between the first position and the second position, where the first end of the guiding means is far from the outlet opening, the guiding means being in this third position. In this way, freeing each of the output channels from obstacles reduces the load loss.

According to another aspect which does not belong to the invention, the displacement of the guiding means comprises a straight or linear movement between the first position and the second position. The straight line or linear displacement to be followed by means of guidance simplifies the structure of the air diffuser, reducing the number of mechanisms required.

According to the invention, the first wall comprises a bottom edge and the second wall comprises a top edge, where the top edge and bottom edge define the outlet opening. Thus, the guiding means faces the edge in the area of the air outlet by blocking the air outlet through one of the channels in the first and second position.

It should be noted that the top and bottom edges are in a plane substantially perpendicular to the direction of airflow in the cavity. This results in a symmetrical structure of both the casing and the cavity defined by the casing. Depending on the position of the guiding means, a deviation of the air outlet flow in a first direction or in a second direction of equal quantity is thus achieved. In addition, the air outlet to the interior of the vehicle through either of the two channels has optimum intensity and routing.

According to another aspect which does not belong to the invention, the top edge and the bottom edge are comprised in a plane substantially inclined with respect to the forward direction of the air in the cavity. This results in an asymmetrical structure of both the casing and the cavity defined by the casing. Thus, a deviation of the air outlet flow in a first direction or in a second direction is achieved, depending on the position of the guiding means, of different quantity. Thus, this particular geometry enables the air range field to meet the requirements that the air extracted by the outlet opening directly contact the waist of an passenger arranged inside the vehicle and up to a zone above the passenger's head.

More in detail, the bottom edge is positioned forward of the top edge in the direction of airflow in the cavity. In this way, the air is directed more optimally towards the upper part of the interior.

According to the invention, the first end is arranged flush with the top edge, the guiding means being in the first position, and the first end is arranged flush with the bottom edge, the guiding means being in the second position. In this way, the flow does not find any exit, wall or obstacle that deviates the direction of exit, improving the direction of air of the diffuser. In addition, the walls that define the cavity are continuous, in order to prevent the air flow from encountering possible obstacles that create interference.

Preferably, the guiding means comprises a lower surface facing the first wall, and an upper surface facing the second wall, where at least one zone of the lower surface is substantially parallel to the first wall, with the guiding means in the first position, and where at least one zone of the upper surface is substantially parallel to the second wall with the guiding means in the second position. The parallelism between the guiding means and the walls that define the cavity allows an optimal direction of the air flow. Thus, in the final section, the two channels comprise a constant section, without narrowing or widening said section. This constant section is independent of the position of the guiding means.

Preferably, the upper surface of the guiding means is symmetrical to the lower surface of the guiding means with respect to an axis, where the axis is parallel to the air outlet direction. This ensures that the upper airflow and the lower airflow are equal.

Preferably, at least one area of the upper surface comes into contact with second wall, the guiding means being in the first position, and at least one area of the lower surface comes into contact with first wall, the guiding means being in the second position. Thus, the gap created between the guiding means and the walls is reduced, preventing more air from becoming clogged and creating turbulence or interference.

Preferably, the first and second walls are concave. The Coand 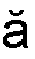 effect allows the air to adhere to the walls following their trajectory. This results in a widening of the cavity and, subsequently, a narrowing of the cavity in the direction of air flow. Alternatively, the narrowing of the airflow is constant and may be constant or of greater quantity in the area near the outlet opening.

Preferably, the outlet opening comprises a single slot. This eliminates visible horizontal blades and directs the airflow in all directions via this slot. In this way, the present invention, in its simplest form, presents a diffuser for a vehicle interior integrated into the dashboard with a single slot, in such a way that all the horizontal blades are eliminated. The air flow is directed in all directions in the vertical plane from a manual or electrical kinematics by positioning the central or guiding means blade in different positions within the diffuser casing.

The attached drawings show, by way of a non-limiting example, an air diffuser for a vehicle.

Other characteristics and advantages of such an air diffuser for a vehicle, will be evident from the description of a preferred, but not exclusive, embodiment illustrated by way of a non-limiting example in the accompanying drawings in which:

### Brief description of the drawings

Figure 1. A perspective view of the interior of a vehicle with an air diffuser, according to the present invention.
Figure 2A. A first lateral section view of an air diffuser for a vehicle, with the guiding means in position displaced upwards, according to the present invention.
Figure 2B. A second lateral section view of an air diffuser for a vehicle, with the guiding means in a position displaced downwards, according to the present invention.
Figure 2C. A third lateral section view of an air diffuser for a vehicle, with the guiding means in neutral position, according to the present invention.
Figure 3A. A second lateral section view of an air diffuser for a vehicle, which does not belong to the present invention, with a guiding means configured to make a straight displacement.
Figure 3B. A first lateral section view of an air diffuser for a vehicle, which belongs to the present invention, with a means of guidance
configured to perform a curved displacement.
Figure 4A. A first perspective view of an air diffuser for a vehicle, with a casing whose top and bottom edges describe a plane perpendicular to the direction of airflow in the cavity.
Figure 4B. A second perspective view of an air diffuser for a vehicle, which does not belong to the present invention, with a casing whose top and bottom edges describe an inclined plane with respect to the forward direction of the air in the cavity.

### Description of a preferential embodiment

In view of the aforementioned figures and, according to the adopted numbering, an example of preferential embodiment of the invention can be observed in them, which comprises the parts and elements that are indicated and described in detail below.

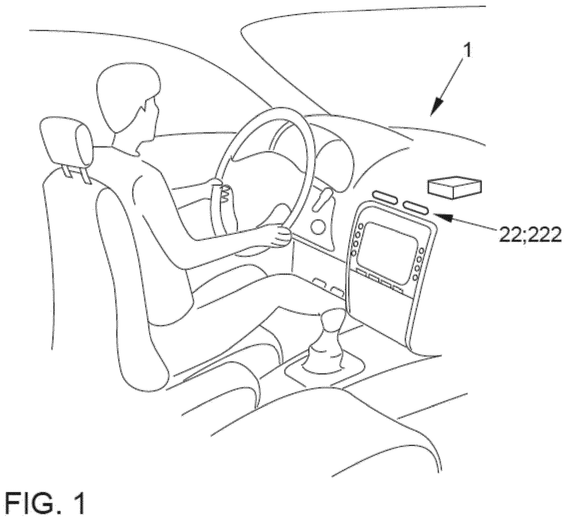

Figure 1 illustrates a perspective view of the interior of the passenger compartment of a vehicle 1 with an air diffuser, including an outlet opening 22 and a slot 222. One of the objectives of this invention is to reduce the size used for the air outlet slot 222, reducing the surface seen by the user from the inside of vehicle 1, in such a way that the slot is as narrow as possible. In a preferential embodiment, according to the present invention, the height of the slot seen from inside the cabin of the outlet opening 22 has a height less than 20 mm and is preferably 12 mm. According to the present invention, the horizontal blades on the outside of the diffuser, as currently used, are removed, leaving a single rectangular slot 222 in the board. This reduces the space used for the air outlet and by means of a single guiding means 33 the air can be directed in all directions in a vertical plane following a movement of displacement of a guiding means 3. In more detail, the outlet opening 22 is a single slot 222.

This unique guiding means 3 manages to direct the flow of air out of the outlet opening 22 in one of the directions, e.g. in a vertical direction of the flow out of the outlet opening 22. In order to achieve horizontal guidance in a particular embodiment, at least one horizontal blade would be required, placed in the part closest to the inlet opening 21.

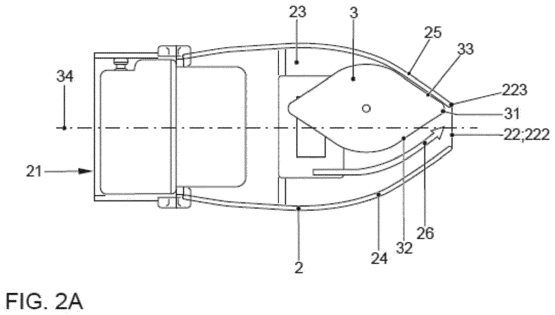

As an illustration, figure 2A presents a first cross-section view of an air diffuser for a vehicle 1, with the guiding means 3 in the upwardly displaced position. In this figure you can see the air flow from the inlet opening 21 to the outlet opening 22. The diffuser comprises a guiding means 3 arranged in a cavity 23 defined by a casing 2 comprising a first wall 24 and a second wall 25, the cavity 23 being found after the inlet opening 21, following the forward direction of the air duct 26, and before the outlet opening 22. The first wall 24 and the second wall 25 are facing each other and, in a preferential way, they narrow until the outlet opening 22. The purpose of the guiding means 3 is to guide the air in the outlet opening 22 area towards the top and bottom of the passenger compartment, in a vertical plane. The geometry of the guiding means 3 in combination with the inner walls of the casing 2 allows air to constrict against the walls and outlet cavity 23 with greater intensity in the area of the outlet opening 22.

In particular, the outlet opening 22 comprises a top edge 223, a slot 222 and a bottom edge 221, in such a way that an outlet opening 22 is formed between the top edge 223 and the bottom edge 221. The guiding means 3, comprises a first end 31, generating at least one air duct 26 flow.

Figure 2A shows the guiding means 3 in the upward position. An air duct 26 can be seen below the guiding means 3, which exits through the outlet opening 22 in an upward direction. In this figure it can be seen that the guiding means 3 is displaced in a first position. When the guiding means 3 is displaced towards the top, a channel 26 is created which is adhered to the first wall 24, at least in the area of the outlet opening 22. The guiding means 3 is arranged in a position adjacent to the second upper wall 25, blocking the passage of an upper air duct 26, forcing the air to constrict against the lower wall 24. The lower surface 32 of the guiding means 3 is parallel to the lower wall or first wall 24 of the casing 2, at least in the area close to the outlet opening 22. Thus, both the first wall 24 and the lower surface 32 are both inclined upwards in relation to a plane parallel to the air inlet in cavity 23, in such a way that the air exits through the slot 222 upwards.

More specifically, as can be seen in figure 2A, the first end 31 is flush or aligned with the top edge 223, in such a way that the air does not encounter obstacles in the path, in such a way that the lower surface 32 and the top edge 223 form a continuous surface. In a preferential way, at least one area of the second wall 25 comes into contact with upper surface 33 of the guiding means 3. Preferably the contact zone is the zone closest to the air outlet opening 22, to optimise airflow routing and avoid a drop-in pressure. The more surface is in contact, the less gap is generated between the two, in such a way that less air is clogged, avoiding the interference that this may generate.

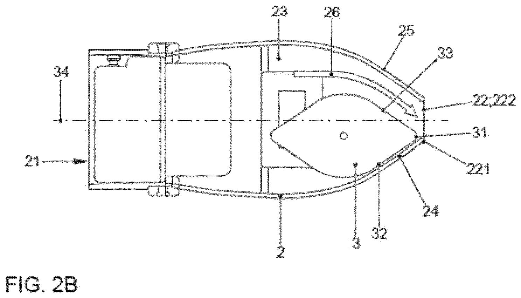

Figure 2B shows this, a second lateral section view of an air diffuser for a vehicle 1, with the guiding means 3 in a position displaced downwards, in according to the present invention. In this figure it can be seen that the guiding means 3 is displaced in a second position. An air duct 26 can be seen above the guiding means 3, which exits through the outlet opening 22 in a downward direction. When the guiding means 3 is displaced towards the lower part with a first end 31 adjacent to the first wall 24, a channel 26 is created which is adhered to the second wall 25 at least in the area next to the outlet opening 22. The guiding means 3 in this lower position blocks the passage of an air duct 26 adhered to the lower zone, forcing the air to constrict against the upper wall or second wall 25. The upper surface 33 of the guiding means 3 is parallel to the upper wall of the casing 2, at least in the area of the outlet opening 22. Both describe a downward slope with respect to a parallel plane to the air inlet in cavity 23, in such a way that the air exits through the slot 222 downwards. More specifically, the first end 31 is flush with the bottom edge 221, in such a way that the air does not encounter obstacles in the way. In a preferential way, at least one area of the first wall 24 comes into contact with the bottom surface of the guiding means 3.

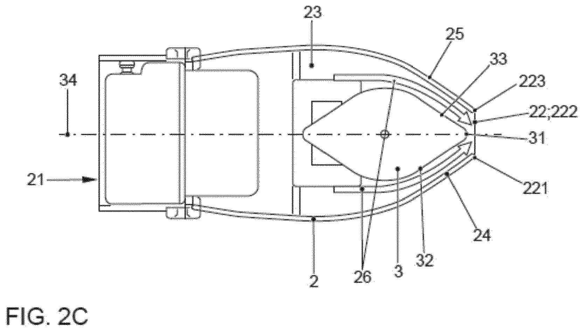

Figure 2C shows a third cross-section view of an air diffuser for a vehicle 1, with guiding means 3 in a neutral position. Thus, it can be observed that the guiding means 3 is in an intermediate position, horizontally parallel to the plane of air inlet to cavity 23. In this particular position the air enters through the inlet opening 21 and adheres to the first wall 24 and the second wall 25 when there are no obstacles, creating an upper channel 26 and a lower channel 26. This creates a channel 26 of airflow that exits in a horizontal direction. In this neutral position the ratio of the volume of the upper and lower flow is proportional.

In figures 2A, 2B and 2C it can be seen that the upper surface 33 of the guiding means 3 is symmetrical to the lower surface 32 of the guiding means 3 with respect to a first axis 34 parallel to the air outlet direction. In a preferential way, it can be seen that the shape of the first wall 24 and the second wall 25 are concave, at least in the area of the outlet opening. This produces the Coand 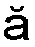 effect, which causes air to adhere to both the upper and lower walls, and exit through the slot in the direction that the wall geometry would follow.

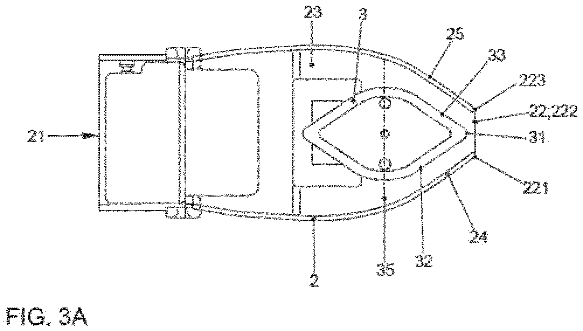

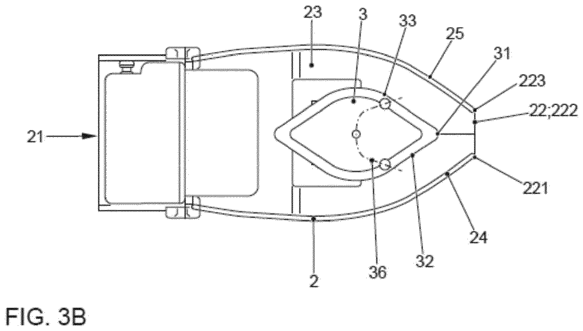

Between the first position of the guiding means 3 and the second position, the guiding means 3 is positioned in a plurality of intermediate positions by dividing the cavity 23 into two channels 26. In these intermediate positions, the lower channel 26 or the upper channel 26 is not fully closed by the guiding means 3. This generates a mixture in the air outlet of the upper and lower flow. In the event that the flow with the highest flow is through the lower channel 26 and the flow with the lowest flow is through the upper channel 26, both would come together in the area of the outlet opening 22 and the resulting direction of this mixture would be slightly towards the upper area of the passenger compartment. In figure 3A, it is possible to observe, according to another embodiment which does not belong to the present invention, a first view on the side of the diffuser section, with the guiding means 3 configured to make a straight line 35 or linear movement from the first position to the second position. Alternatively, as shown in figure 3B, according to an embodiment which belongs to the present invention, a second side view of the diffuser section is shown, with guiding means 3 configured to perform a movement following a curved line 36.

In more detail, as shown in figure 3B, the guiding means 3 define a third position between the first and second position. In this position, the first end 31 is far from the outlet opening 22, freeing the area closest to the outlet of obstacles for the air and decreasing the pressure loss caused by having the first end 31 exactly at the outlet of the flow. Moreover, in this position, the guiding means 3 is hidden from view by a user inside the passenger compartment. It is understood that in the plurality of intermediate positions between the first position and the third position, or in the plurality of intermediate positions between the second position and the third position, the first end 31 of the guiding means 3 is also far from outlet opening 22, but to a lesser extent.

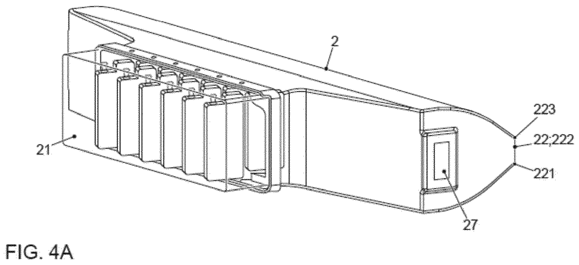

As an illustration, figure 4A shows a first perspective view of an air diffuser for a vehicle 1, with a casing 2 whose top edge 223 and bottom edge 221 describe a plane parallel to the air inlet or inlet opening 21. In this mode of embodiment, the ratio between the intensity of the upper airflow and the lower airflow are equal, not penalising the loss of charge neither in the first position nor in the second position. The air duct 26 that comes out through the upper part in the second upper deviates the same degrees with respect to the axis 34 as the air duct 26 that comes out through the lower part in the first position. The direction of air outlet thus depends on the position of the guiding means 3 and not on the arrangement of the top edge 223 with respect to the bottom edge 221.

Depending on the method of embodiment shown in figure 4A, the casing 2 comprises a guide 27, through which at least one connected or protruding element of the guiding means 3 is moved, in such a way that the displacement of the guiding means 3 is defined. In addition, the guide 27 retains guiding means 3 in all positions, e.g. by controlling the interference between the protrusion of the guiding means 3 and guide 27. This guide 27 can be an opening in one of the sides of the casing 2 that follows the line where the guiding means 3 is to be moved. Thus, the guide 27 defines an elongated and straight geometry, according to a first embodiment that does not belong to the claimed invention, or a curved "C" geometry, according to a second embodiment that belongs to the claimed invention. Alternative geometries can also be used to define a shift between the first and second position.

As can be seen in figure 4A, there are vertical blades, configured to be able to modify the direction of the air flow in the horizontal plane, i.e. towards a right or left zone of the interior of the passenger compartment. These vertical blades are arranged in an area adjacent to the inlet opening 21, inside cavity 23.

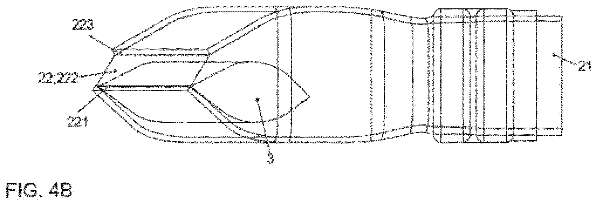

Alternatively, figure 4B shows in a figurative way a second perspective view of an air diffuser for a vehicle 1, according to an embodiment which does not belong to the present invention, with a casing 2 whose top edge 223 and bottom edge describe an inclined plane with respect to the direction of airflow in the cavity 23. Preferably the bottom edge 221 is forward in the forward direction of air outlet in the cavity 23 with respect to the top edge 223. The casing 2 is asymmetrical on the axis 34, in such a way that the lower wall extends a longer distance to the outlet opening 22 than the upper wall.

In this way, the air flow that circulates through the lower channel 26, when the guiding means 3 is in the first position, adheres to the lower wall just at the air outlet, improving addressing.

This geometry generates a pressure drop in the second position, since in the air outlet the upper wall does not describe such a steep downward slope, in such a way that the direction of flow is not proportional in the first position and in the second position. This geometry makes it easier for the air range field to meet technical requirements and the airflow is directed from the waist zone to the passengers' heads. It is understood that, in this configuration, the guiding means 3 also defines a displacement between the first position and the second position, being able to be the straight or curved displacement, as previously defined.

The details, shapes, dimensions and other accessory elements, as well as the components used in the implementation of the air diffuser for a vehicle 1, may be conveniently replaced by others that are technically equivalent, and do not deviate from the scope of the invention as defined by the appended claims.

### List of numerical references

1 vehicle
2 casing
21 inlet opening
22 outlet opening
221 bottom edge
222 slot
223 top edge
23 cavity
24 first wall
25 second wall
26 channel
27 guide
3 guiding means
31 first end
32 lower surface
33 upper surface
34 axle
35 straight line
36 curved line

## Claims

1. Air diffuser for a vehicle (1), where the air diffuser comprises a casing (2), where the casing (2) defines:
- an air inlet opening (21),
- an air outlet opening (22), and
- a cavity (23), where the cavity (23) is arranged between the inlet opening (21) and the outlet opening (22),
where the casing (2) comprises a first wall (24) and a second wall (25), where the first wall (24) is facing the second wall (25), where the first wall (24) and the second wall (25) define a narrowing of the cavity (23) to the outlet opening (22), where the first wall (24) comprises a bottom edge (221) and where the second wall (25) comprises a top edge (223), where the top edge (223) and bottom edge (221) define the outlet opening (22), where the air diffuser comprises a guiding means (3) arranged in the cavity (23), where the guiding means (3) comprises a first end (31) close to the outlet opening (22), the guiding means (3) being displaceable between:
- a first position, where the first end (31) is arranged adjacent to the second wall (25), where the first end (31) is configured to remain facing the top edge (223), with the guiding means (3) being displaced in the first position, and
- a second position, where the first end (31) is arranged adjacent to the first wall (24), and where the first end (31) is configured to remain facing the bottom edge (221), with the guiding means (3) being displaced in the second position, and where the casing (2) comprises at least one guide (27), where the at least one guide (27) defines a displacement of the guiding means (3) between the first position and the second position, the displacement of the guiding means (3) comprising a third position, where the third position is intermediate between the first position and the second position, **characterised in that** the first end (31) of the guiding means (3) is far from the outlet opening (22) with the guiding means (3) being displaced in this third position, with the guiding means (3) being displaced in the first position, the first end (31) is arranged flush with the top edge (223), and with the guiding means (3) being displaced in the second position, the first end (31) is arranged flush with the bottom edge (221).

2. Air diffuser according to Claim 1, **characterised in that** the guiding means (3) can be moved in a plurality of intermediate positions between the first position and the second position, in such a way that in each intermediate position the guiding means (3) divides the cavity (23) into two channels (26).

3. Air diffuser according to any of the above claims, where the guiding means (3) comprises a lower surface (32) facing the first wall (24), and an upper surface (33) facing the second wall (25), where at least one zone of the lower surface (32) is substantially parallel to the first wall (24), with the guiding means (3) being displaced in the first position, and where at least one zone of the upper surface (33) is substantially parallel to the second wall (25), with the guiding means (3) being displaced in the second position.

4. Air diffuser according to Claim 3, where at least one area of the upper surface (33) comes into contact with the second wall (25), with the guiding means (3) being displaced in the first position, and where at least one area of the lower surface (32) comes into contact with the first wall (24), with the guiding means (3) being displaced in the second position.

5. Air diffuser according to any of the above claims, **characterised in that** the first wall (24) and the second wall (25) are concave.

6. Air diffuser according to any of the above claims, **characterised in that** the outlet opening (22) comprises a single slot (222).

## Patentansprüche

1. Luftverteiler für ein Fahrzeug (1), wobei der Luftverteiler ein Gehäuse (2) umfasst, wobei das Gehäuse (2) Folgendes definiert:
- eine Lufteinlassöffnung (21),
- eine Luftauslassöffnung (22), und
einen Hohlraum (23), wobei der Hohlraum (23) zwischen der Einlassöffnung (21) und der Auslassöffnung (22) angeordnet ist,
wobei das Gehäuse (2) eine erste Wand (24) und eine zweite Wand (25) umfasst, wobei die erste Wand (24) der zweiten Wand (25) gegenüber liegt, wobei die erste Wand (24) und die zweite Wand (25) eine Verengung des Hohlraums (23) zur Auslassöffnung (22) definieren, wobei die erste Wand (24) eine untere Kante (221) umfasst, und wobei die zweite Wand (25) eine obere Kante (223) umfasst, wobei die obere Kante (223) und die untere Kante (221) die Auslassöffnung (22) definieren, wobei der Luftverteiler ein Führungsmittel (3) umfasst, das im Hohlraum (23) angeordnet ist, wobei das Führungsmittel (3) ein erstes Ende (31) nahe der Auslassöffnung (22) umfasst, wobei das Führungsmittel (3) verschoben werden kann zwischen:
- einer ersten Position, in der das erste Ende (31) benachbart der zweiten Wand (25) angeordnet ist, wobei das erste Ende (31) konfiguriert ist, um weiterhin der oberen Kante (223) gegenüberzuliegen, wobei das Führungsmittel (3) in die erste Position verschoben ist, und
- einer zweite Position, in der das erste Ende (31) benachbart der ersten Wand (24) angeordnet ist, und wobei das erste Ende (31) konfiguriert ist, um weiterhin der unteren Kante (221) gegenüberzuliegen, wobei das Führungsmittel (3) in die zweite Position verschoben ist, und wobei das Gehäuse (2) mindestens eine Führung (27) umfasst, wobei die mindestens eine Führung (27) eine Verschiebung des Führungsmittels (3) zwischen der ersten Position und der zweiten Position definiert, wobei die Verschiebung des Führungsmittels (3) eine dritte Position umfasst, wobei die dritte Position zwischen der ersten Position und der zweiten Position liegt, **dadurch gekennzeichnet, dass** das erste Ende (31) des Führungsmittels (3) weit von der Auslassöffnung (22) entfernt ist, wobei das Führungsmittel (3) in die dritte Position verschoben ist, wobei das Führungsmittel (3) in die erste Position verschoben ist, das erste Ende (31) bündig mit der oberen Kante (223) angeordnet ist, und wobei das Führungsmittel (3) in die zweite Position verschoben ist, das erste Ende (31) bündig mit der oberen Kante (221) angeordnet ist.

2. Luftverteiler nach Anspruch 1, **dadurch gekennzeichnet, dass** das Führungsmittel (3) in eine Vielzahl von Zwischenpositionen zwischen der ersten Position und der zweiten Position bewegt werden kann, so dass in jeder Zwischenposition das Führungsmittel (3) den Hohlraum (23) in zwei Kanäle (26) teilt.

3. Luftverteiler nach einem der vorhergehenden Ansprüche, wobei das Führungsmittel (3) eine untere Fläche (32) umfasst, die der ersten Wand (24) gegenüberliegt, und eine obere Fläche (33), die der zweiten Wand (25) gegenüberliegt, wobei mindestens ein Bereich der unteren Fläche (32) im Wesentlichen parallel zur ersten Wand (24) ist, wobei das Führungsmittel (3) in die erste Position verschoben ist, und wobei mindestens ein Bereich der oberen Fläche (33) im Wesentlichen parallel zur zweiten Wand (25) ist, wobei das Führungsmittel (3) in die zweite Position verschoben ist.

4. Luftverteiler Anspruch 3, wobei mindestens ein Bereich der oberen Fläche (33) in Kontakt mit der zweiten Wand (25) kommt, wobei das Führungsmittel (3) in die erste Position verschoben ist, und wobei mindestens ein Bereich der unteren Fläche (32) in Kontakt mit der ersten Wand (24) kommt, wobei das Führungsmittel (3) in die zweite Position verschoben ist.

5. Luftverteiler nach einem der vorhergehenden Ansprüche 1, **dadurch gekennzeichnet, dass** die erste Wand (24) und die zweite Wand (25) konkav sind.

6. Luftverteiler nach einem der vorhergehenden Ansprüche 1, **dadurch gekennzeichnet, dass** die Auslassöffnung (22) einen einzigen Schlitz (222) umfasst.

## Revendications

1. Diffuseur d'air pour un véhicule (1), dans lequel le diffuseur d'air comprend un boîtier (2), dans lequel le boîtier (2) définit :
une ouverture d'entrée d'air (21),
une ouverture de sortie d'air (22), et
une cavité (23), dans lequel la cavité (23) est agencée entre l'ouverture d'entrée (21) et l'ouverture de sortie (22),
dans lequel le boîtier (2) comprend une première paroi (24) et une seconde paroi (25), dans lequel la première paroi (24) fait face à la seconde paroi (25), dans lequel la première paroi (24) et la seconde paroi (25) définissent un rétrécissement de la cavité (23) vers l'ouverture de sortie (22), dans lequel la première paroi (24) comprend un bord inférieur (221) et dans lequel la seconde paroi (25) comprend un bord supérieur (223), dans lequel le bord supérieur (223) et le bord inférieur (221) définissent l'ouverture de sortie (22), dans lequel le diffuseur d'air comprend un moyen de guidage (3) agencé dans la cavité (23), dans lequel le moyen de guidage (3) comprend une première extrémité (31) à proximité de l'ouverture de sortie (22), le moyen de guidage (3) étant déplaçable entre :
une première position dans laquelle la première extrémité (31) est agencée de manière adjacente à la seconde paroi (25), dans laquelle la première extrémité (31) est configurée pour rester en face du bord supérieur (223), avec le moyen de guidage (3) qui est déplacé dans la première position, et
une deuxième position dans laquelle la première extrémité (31) est agencée de manière adjacente à la première paroi (24), et dans laquelle la première extrémité (31) est configurée pour rester en face au bord inférieur (221), avec le moyen de guidage (3) qui est déplacé dans la deuxième position,
et dans lequel le boîtier (2) comprend au moins un guide (27), dans lequel le au moins un guide (27) définit un déplacement du moyen de guidage (3) entre la première position et la deuxième position, le déplacement du moyen de guidage (3) comprenant une troisième position, dans lequel la troisième position est entre la première position et la deuxième position, **caractérisé en ce que** la première extrémité (31) du moyen de guidage (3) est éloignée de l'ouverture de sortie (22) avec le moyen de guidage (3) qui est déplacé dans cette troisième position, avec le moyen de guidage (3) qui est déplacé dans la première position, la première extrémité (31) est agencée à fleur avec le bord supérieur (223), et avec le moyen de guidage (3) qui est déplacé dans la deuxième position, la première extrémité (31) est agencée à fleur avec le bord inférieur (221).

2. Diffuseur d'air selon la revendication 1, **caractérisé en ce que** le moyen de guidage (3) peut être déplacé dans une pluralité de positions intermédiaires entre la première position et la deuxième position, de sorte que dans chaque position intermédiaire, le moyen de guidage (3) divise la cavité (23) en deux canaux (26).

3. Diffuseur d'air selon l'une quelconque des revendications précédentes, dans lequel le moyen de guidage (3) comprend une surface inférieure (32) faisant face à la première paroi (24) et une surface supérieure (33) faisant face à la seconde paroi (25), dans lequel au moins une zone de la surface inférieure (32) est sensiblement parallèle à la première paroi (24), avec le moyen de guidage (3) qui est déplacé dans la première position, et dans lequel au moins une zone de la surface supérieure (33) est sensiblement parallèle à la seconde paroi (25), avec le moyen de guidage (3) qui est déplacé dans la deuxième position.

4. Diffuseur d'air selon la revendication 3, dans lequel au moins une zone de la surface supérieure (33) vient en contact avec la seconde paroi (25), avec le moyen de guidage (3) qui est déplacé dans la première position, et dans lequel au moins une zone de la surface inférieure (32) vient en contact avec la première paroi (24), avec le moyen de guidage (3) qui est déplacé dans la deuxième position.

5. Diffuseur d'air selon l'une quelconque des revendications précédentes, **caractérisé en ce que** la première paroi (24) et la seconde paroi (25) sont concaves.

6. Diffuseur d'air selon l'une quelconque des revendications précédentes, **caractérisé en ce que** l'ouverture de sortie (22) comprend une seule fente (222).
